# DEMANDE DE BREVET EUROPEEN

(11) **EP 0 557 149 A1**
(43) Date de publication de la demande: **25.08.1993**
(21) Numéro de dépôt: 93400227.0
(22) Date de dépôt: 29.01.1993
(51) Int. Cl.: G01B 3/20

(54) **Dispositif pour mesurer et mémoriser une dimension**

(30) Priorité: 30.01.1992 FR 9201009
(71) Demandeur: INFO ADAPT'SERVICES Société à Responsabilité Limitée, F-92120 Montrouge (FR)
(72) Inventeur: Vignat, Eric, F-75116 Paris (FR); Gorin, Jaques Olivier, F-78000 Versailles (FR)
(74) Mandataire: Keib, Gérard

(57) **Abrégé**

L'invention concerne un dispositif de mesure de dimension comportant un élément déplaçable (4) pour réaliser une mesure de dimension et comportant un dispositif électronique (5) comprenant une première séquence pour mémoriser une valeur de longueur mesurée.

Le dispositif électronique est agencé pour produire au moins une deuxième séquence pour mémoriser une information appartenant à un tableau et qui est pointée dans celui-ci en fonction du déplacement dudit élément déplaçable (2), ledit élément gradué comportant une pluralité d'aimants (11) espacés entre eux.

## Description

La présente invention concerne un dispositif pour mesurer et mémoriser une dimension.

Il est connu de réaliser la saisie d'informations sur le terrain en associant dans un même système, un pied à coulisse et un dispositif de mémorisation tel qu'un micro-ordinateur. Plus concrètement, les forestiers ont besoin d'un outil, habituellement dénommé "compas forestier", leur permettant d'enregistrer le diamètre d'un arbre. La mesure qui est effectuée est soit un diamètre, soit une circonférence. La précision souhaitable est variable dans certains de ces deux cas. On travaille en diamètre et en circonférence compensée, l'intervalle entre deux classes de diamètres étant de 5 ou 10 cm pour les deux classes de circonférence.

Avec ce type de dispositif, la saisie de données se réalise toujours en extérieur et parfois dans des conditions difficiles telles que pluie, neige, froid, chaud, poussière, etc.

L'invention propose un dispositif de mesure de dimension présentant une grande facilité d'emploi.

Dans ce but, un dispositif de mesure de dimension comporte un élément déplaçable pour réaliser une mesure de dimension et comportant un dispositif électronique permettant de produire une première séquence pour mémoriser une valeur mesurée et caractérisé en ce que le dispositif électronique est agencé pour produire au moins une deuxième séquence pour mémoriser une information appartenant à un tableau et qui est pointée dans celui-ci en fonction du déplacement dudit élément déplaçable, ledit élément gradué comportant une pluralité d'aimants espacés entre eux.

Le fonctionnement du dispositif est particulièrement simple en ce qu'il suffit de déplacer l'élément, tel qu'un curseur, pour sélectionner un certain nombre de données à prendre en compte parmi des données d'un tableau ou de données mémorisées dans le micro-ordinateur.

Le dispositif de mesure peut comporter un pied à coulisse, l'information étant une indication relative à la nature du matériau d'un objet à mesurer, par exemple le nom du matériau à mesurer, et/ou la hauteur de l'objet à mesurer et/ou sa qualité.

Il suffit dans ce cas de déplacer le curseur jusqu'à la position correspondant, par convention, au matériau dont on mesure une ou plusieurs dimensions, ce qui permettra le cas échéant, après validation de l'indication, de réaliser ensuite, un calcul de volume, soit dans l'organiseur 5, soit dans un ordinateur externe avec lequel l'organiseur 5 peut être interfacé par une sortie appropriée.

Selon un mode de réalisation, le dispositif est agencé pour produire une troisième séquence pour introduire dans le dispositif électronique au moins une donnée extérieure, telle que la hauteur de l'objet à mesurer à l'aide d'un clavier.

Dans l'application ci-dessus qui concerne les compas forestiers, les données mémorisées sont en général utilisées pour déduire le volume d'une grume d'arbre à partir de la mesure de sa circonférence ou de son diamètre, de son tarif de cubage correspondant à l'essence de l'arbre et à la hauteur mesurée ou estimée.

Dans ce but, le dispositif est agencé pour réaliser une quatrième séquence de calculs pour produire un résultat de calculs à partir au moins de la valeur des dimensions mesurées et d'une dite information.

Selon un mode de réalisation particulièrement avantageux, l'élément gradué porte une pluralité d'aimants dont la taille et l'écartement sont agencés pour produire plusieurs classes de mesure dans autant de zones de l'élément gradué.

Selon un mode de réalisation préféré, ledit élément déplaçable comporte des capteurs décalés de manière à permettre une identification du sens du déplacement. Il peut en particulier comporter deux capteurs dont l'espacement est sensiblement égal à une demi-largeur d'aimant (modulo le pas des aimants).

Selon un mode de réalisation particulièrement avantageux, le dispositif comporte au moins un élément de commande manuelle tel qu'un bouton pour dérouler une pluralité de séquences de validation correspondant à une opération de mesure.

Un dispositif d'affichage peut également permettre d'afficher au moins une dite information et/ou au moins une dite donnée, de manière à faciliter la validation de la ou des indications relatives à la nature du matériau de l'objet à mesurer.

D'autres caractéristiques et avantages de l'invention apparaîtront à la lecture de la description qui va suivre, donnée à titre d'exemple non limitatif, en liaison avec les dessins qui représentent :
- la figure 1, un dispositif de mesure selon l'invention,
- la figure 2, un schéma indicatif de la correspondance entre le déplacement d'un curseur de pied à coulisse et une information mémorisée dans un tableau,
- la figure 3, un exemple d'organigramme selon un mode préféré de réalisation de l'invention.
- les figures 4a à 4d un mode de réalisation préféré de l'invention, et
- la figure 5 un compas forestier à deux rangées d'aimants mettant en oeuvre les figures 4a à 4d

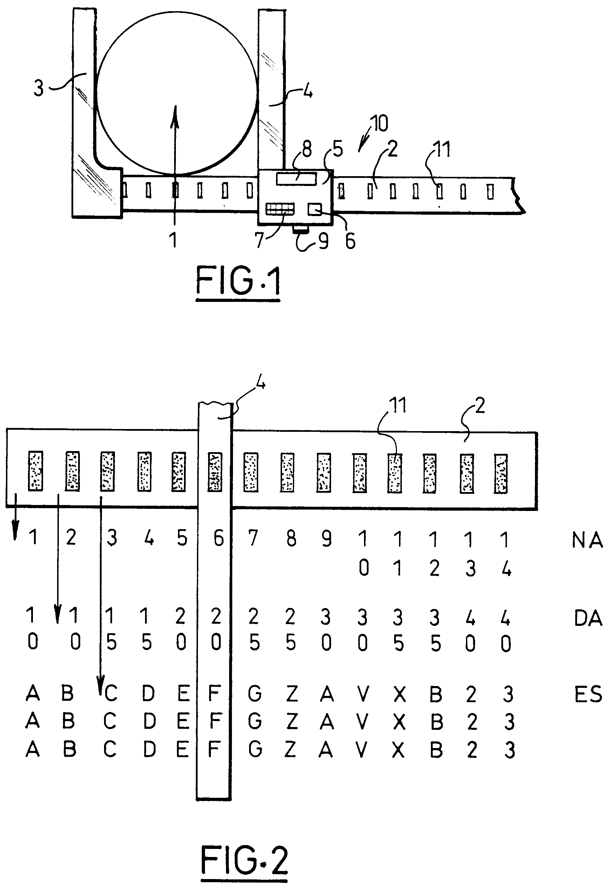

Selon la figure 1, le pied à coulisse, désigné par le repère général 10, permet de mesurer le diamètre d'une pièce à mesurer 1. Le pied à coulisse comprend un bras fixe 3 et une règle 2 sur laquelle coulisse un bras coulissant 4 portant un dispositif électronique tel qu'un organiseur 5, c'est-à-dire un micro-ordinateur pré-programmé pour dérouler un programme selon un menu de séquencement pré-établi.

L'organiseur 5 est relié à une touche de commande de fonction 6, et il comporte un clavier 7 et un dispositif d'affichage 8, ainsi qu'une sortie d'interfaçage 9. Il est relié via ladite sortie 9 aux capteurs et à une touche de validation de fonction 6.

Comme représenté à la figure 2, la règle 2 comporte des aimants 11, régulièrement espacés, simulant une échelle graduée. La taille des aimants (largeur et longueur) ainsi que leur écartement sont optimisés de telle sorte qu'un changement de classe se fasse exactement au même point quel que soit le sens de déplacement du bras coulissant 4. Ceci est en particulier obtenu grâce à la mise en oeuvre de capteurs décalés, par exemple d'un demi-pas qui permet d'identifier le sens du déplacement. L'intervalle entre deux classes de diamètre est 5 cm (par exemple, la classe 10 cm s'étend de 7,5 à 12,5 cm). L'intervalle entre deux classes de circonférence est 10 cm.

L'information doit être disponible à tout moment et exacte. Un processeur dédié du dispositif électronique 5 permet à cet effet le comptage et/ou le décomptage des plots des aimants 11 même si l'organiseur est occupé à d'autres tâches. La mise en fonctionnement des capteurs décalés, se fait par logiciel sans interruption. Une mise automatique en veille de l'organiseur 5 ne doit pas interrompre le comptage et/ou le décomptage, de manière à conserver la valeur de la position absolue. En tout état de cause, il peut être prévu avant une mesure, une étape d'initialisation permettant de remettre à zéro l'indication fournie par les capteurs.

La validation de la valeur à mesurer se fait par pression sur le bouton 6. Cette pression a pour effet d'indiquer que la lecture est satisfaisante et qu'il faut donc l'enregistrer et passer à la saisie suivante.

Lors de la saisie suivante, la valeur renvoyée par les capteurs et lue par l'organiseur permet de répondre à une ou plusieurs questions posées au cours du déroulement du programme. La valeur numérique lue sert d'indice pour pointer dans un tableau de valeurs. Le tableau peut contenir n'importe quel type d'informations. A la manière des menus déroulants et de la souris des interfaces graphiques de micro-ordinateurs, le bras coulissant 2 permet, par son déplacement, de pointer sur les différentes valeurs du tableau. Les valeurs sont visualisées par programmation sur l'écran 8 de l'organiseur 5. Une pression sur le bouton 6 provoque la validation de l'information pointée dans le tableau.

A la figure 2, les deux premières lignes de chiffres concernent le numéro de l'aimant, ici compris à titre d'exemple entre 1 et 14. Les deux lignes suivantes indiquent la correspondance avec le diamètre D de la pièce à mesurer 1, à savoir 10 pour les aimants 1 et 2 correspondant à la classe 10, 15 pour les aimants n°3 et 4 correspondant à la classe 15, 20 pour les aimants n°5 et 6 et ainsi de suite jusqu'à la valeur 40 pour les aimants n°13 et 14. Les lignes suivantes représentent les valeurs ES de correspondance, par convention arbitraire, permettant d'établir une correspondance entre chacun des aimants et, par exemple, l'essence d'un arbre, dont on mesure le diamètre ou la circonférence. Le premier aimant correspond au mot A, le deuxième au mot B .... le sixième, au mot F, le septième, au mot G, le huitième, au mot Z, le neuvième de nouveau au mot A, le dixième au mot V, le onzième au mot X, le douzième de nouveau au mot B, le treizième chiffre 2 et le quatorzième au chiffre 3. A chacun des lettres ou chiffres ci-dessus correspond dans le pointeur, une indication d'essence d'un arbre. L'organiseur 5 affiche alors en clair le nom de l'arbre sur le dispositif d'affichage 8 et, par appui sur le bouton 6, l'utilisateur valide l'information correspondante. L'information mise en mémoire peut être celle affichée en clair sur le dispositif d'affichage 8. L'information mise en mémoire peut consister en une autre information spécifique du matériau, par exemple sa qualité, éventuellement combinée à l'information affichée.

Un déplacement du bras coulissant 4 a alors pour effet d'initialiser une étape supplémentaire où il est demandé d'introduire une valeur représentant la hauteur de l'arbre dont on veut déterminer le volume. A l'aide du bras coulissant 4, l'utilisateur introduit la valeur désirée, soit estimée, soit mesurée par d'autres moyens, cette valeur s'affichant sur l'afficheur 8. Une nouvelle pression sur le bouton 6 valide la valeur introduite.

Il est également possible de réaliser des calculs à partir des données mémorisées, par exemple le calcul du volume à l'aide du tarif de cubage. Le tarif de cubage est une fonction polynomiale du troisième degré au plus et qui représente le volume V₀ d'un arbre en fonction du diamètre mesuré à sa base et de sa hauteur.

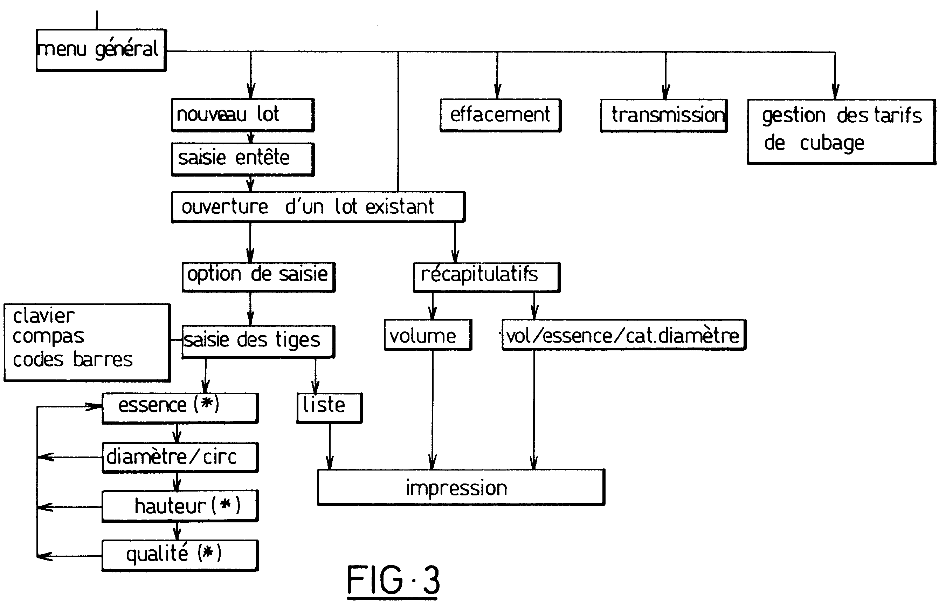

La figure 3 représente un organigramme selon un mode préféré de réalisation de l'invention. A partir d'un menu général, l'utilisateur choisit avec le clavier quatre options, à savoir, introduction d'un nouveau lot de mesures, effacement, transmission (interfaçage avec un ordinateur extérieur) ou gestion des tarifs de cubage. Si c'est l'option "nouveau lot" qui a été choisie, l'utilisateur provoque en appuyant sur une touche du clavier 7 de l'organiseur 5, l'évolution vers l'étape dénommée "saisie d'un entête", puis en appuyant de nouveau sur cette touche, l'étape "ouverture d'un lot existant". Avec le clavier 7, il peut choisir entre deux options, soit l'option "saisie", soit l'option "récapitulatifs" (sortie pour impression selon deux options). S'il choisit l'option "saisie" avec le clavier, il déclenche, grâce à ladite touche, l'étape suivante dénommée "saisie des tiges" qui conduit de nouveau à deux options entre lesquelles il choisit , par l'intermédiaire du clavier 7. La première option correspond aux étapes de mesures qui ont été particulièrement décrites ci-dessus. Il consiste tout d'abord en l'introduction de la nature de l'essence de l'arbre à mesurer. L'opérateur déplace le curseur 4 le long de la règle 2, jusqu'à ce que l'afficheur 8 affiche en clair le nom de l'arbre dont il va mesurer le diamètre ou la circonférence et il valide le résultat en appuyant sur le bouton 6. Un déplacement ultérieur du bras 4 d'au moins un aimant déclenche l'étape suivante de mesure du diamètre ou de la circonférence de l'arbre. L'opérateur dispose alors le pied à coulisse de manière classique de façon à ce que les bras de mesure 3 et 4 viennent en contact avec l'arbre à mesurer et il valide la mesure en appuyant sur le bouton 6. L'organiseur 5 procède alors à l'étape suivante où il demande à l'opérateur de saisir à l'aide du bras coulissant 4 la valeur de la hauteur de l'arbre, valeur qui est validée en appuyant sur le bouton 6, ce qui a pour effet d'induire l'étape suivante "qualité" permettant d'introduire, toujours à l'aide du bras coulissant 4, une donnée relative à la qualité de l'arbre mesuré. Il est possible de retourner au début d'une séquence de mesures à tout moment. L'organigramme est prévu pour permettre de réaliser plusieurs mesures à la suite les unes des autres, de manière itérative. L'autre option possible de l'étape "saisie des tiges" et qui est sélectionnable par le clavier 7 permet d'établir une liste des mesures effectuées et leur impression éventuelle par interfaçage avec une imprimante. L'option "gestion des tarifs de cubage" correspond à la définition du tarif de cubage V₀ d'un arbre mesuré.

Le clavier 7 peut être également utilisé pour entrer des données de préférence des données secondaires ou des données rarement utilisées. Un lecteur de codes-barre peut être également mis en oeuvre.

L'invention ne se limite pas au mode de réalisation décrit ou représenté. En particulier, le système de comptage et de décomptage, utilisé avec l'organiseur, doit pouvoir être employé dans d'autres applications utilisant des mesures discrètes d'indexation.

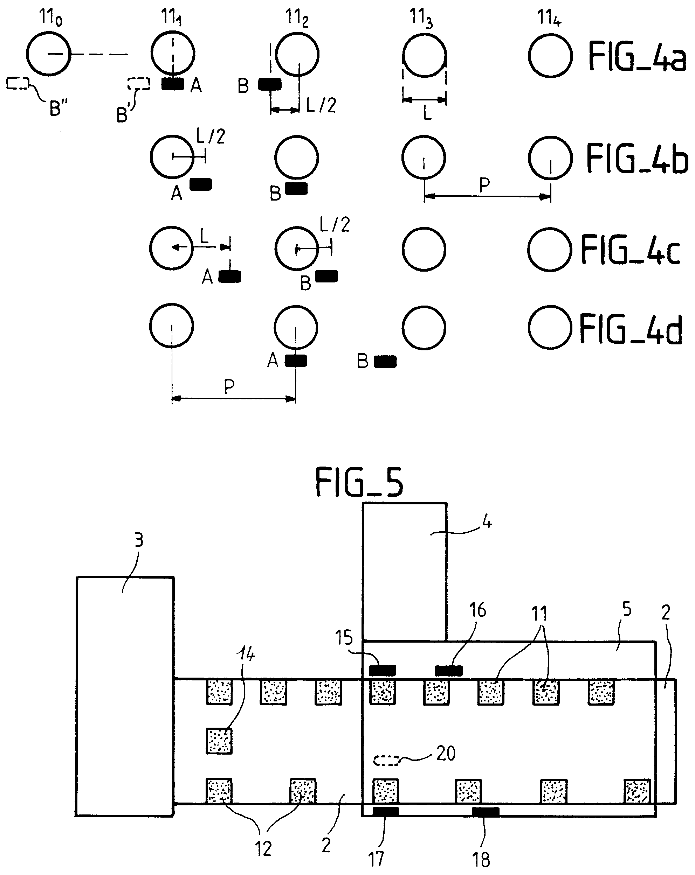

Les figures 4a à 4d illustrent un mode de réalisation préféré permettant une identification du sens de déplacement du bras coulissant 4 le long de la règle 2. Deux capteurs A et B, par exemple, deux détecteurs à effet Hall sont espacés d'une distance sensiblement égale à une demi-largeur L/2 des aimants 11 qui sont inclus dans la règle 2, modulo le pas p des aimants 11. A la figure 4a, le capteur A est situé en face de l'aimant 11₁, alors que le capteur B est décalé de L/2 vers la gauche de l'aimant 11₂. Ce positionnement est réalisé modulo le pas des aimants 11, c'est-à-dire que par exemple l'aimant B pourrait être remplacé par un aimant B' décalé de L/2 vers la gauche de l'aimant 11₁, ou un aimant B'' décalé de L/2 vers la gauche de l'aimant 11₀ etc... Ce positionnement décalé des capteurs A et B permet, du fait de son asymétrie, de déterminer le sens de déplacement du bras 4 le long de la règle 2.

Cette détermination peut s'effectuer par exemple à l'aide d'une logique appropriée en identifiant l'ordre selon lequel les capteurs changent d'état logique. Les détecteurs A et B fournissent un signal logique 5V (niveau 1) quand ils sont face à un aimant et OV (niveau 0) en dehors.

Lorsque les capteurs A et B changent tous les deux d'état logique, ce changement s'effectue de manière décalée mais avec une zone de recouvrement. Les variations d'état logique déclenchent des multivibrateurs monostables. Lorsque les signaux des capteurs A et B changent d'état, avec A précédant B, on incrémente un compteur d'une valeur égale à l'unité. Lorsque les signaux des capteurs A et B changent d'état, avec B précédant A, on décrémente le compteur d'une valeur égale à l'unité. Lorsque A ou B change d'état, sans changement d'état correspondant de l'autre capteur, alors la valeur mémorisée par le compteur n'est pas modifiée.

A la figure 4a, le capteur A produit un signal de niveau logique 1, alors que le capteur B produit un signal de niveau logique 0. Entre la figure 4a et la figure 4b, le bras 4 a été déplacé vers la droite d'une distance L/2. Le capteur A produit un signal de niveau logique 0 alors que le signal du capteur B est passé au niveau 1, mais avec un certain retard par rapport au capteur A en raison du décalage entre les capteurs A et B. Le compteur est alors incrémenté d'une valeur égale à l'unité. Entre la figure 4b et la figure 4c, le bras 4 est de nouveau déplacé de L/2 vers la droite. Le signal du capteur A reste au niveau 0 et le signal du capteur B passe au niveau 1. La valeur mémorisée par compteur reste donc inchangée. Entre la figure 4c et la figure 4d, le bras 4 est déplacé vers la droite de (p-L). Le signal du capteur A passe au niveau 1, celui du capteur B restant au niveau 0. La valeur mémorisée par le compteur reste donc inchangée. Lors du passage du capteur A d'une position située en face de l'aimant 11₁ à une position en face de l'aimant 11₂, le compteur à donc été incrémenté d'une valeur 1. Si on effectue un mouvement en sens inverse entre la figure 4d et la figure 4a, le passage entre la figure 4b et la figure 4a se traduit par un passage de l'aimant B du niveau 1 au niveau 0 puis de l'aimant A du niveau 0 au niveau 1. Le compteur est alors décrémenté d'une valeur égale à l'unité.

La figure 5 illustre un compas forestier à deux rangées d'aimants d'une part référencés 11 déposés sur la partie supérieure de la règle 2 (p = 1cm) avec des capteurs correspondants 15 et 16, et d'autre part référencés 12 disposés sur la partie inférieure de la règle 2 (p=2,5cm) avec des capteurs correspondant 17 et 18. Un aimant 14 situé au début de la règle entre les deux rangées d'aimants 11 et 12 permet d'effectuer une remise à zéro du compteur (détection d'un niveau 1 d'un capteur 20 porté par le bras 4).

## Revendications

**1)** Dispositif de mesure de dimension comportant un élément déplaçable par rapport à un élément gradué et agencé pour réaliser une mesure de dimension et comportant un dispositif électronique (5) permettant de produire une première séquence de mémorisation d'une valeur mesurée, caractérisé en ce que le dispositif électronique est agencé pour produire au moins une deuxième séquence pour mémoriser une information appartenant à un tableau et qui est pointée dans celui-ci en fonction du déplacement dudit élément déplaçable (4), ledit élément gradué comportant une pluralité d'aimants (11) espacés entre eux.

**2)** Dispositif selon la revendication 1, caractérisé en ce qu'il comporte un pied à coulisse et en ce que l'information est une indication relative à la nature du matériau d'un objet (1) à mesurer.

**3)** Dispositif selon les revendications 1 ou 2, caractérisé en ce que l'information est la hauteur et/ou la qualité de l'objet (1) à mesurer.

**4)** Dispositif selon une des revendications 1 à 3, caractérisé en ce qu'il comporte une sortie d'interface.

**5)** Dispositif selon une des revendications précédentes, caractérisé en ce qu'il est agencé pour produire une troisième séquence pour introduire dans le dispositif électronique (5) au moins une donnée extérieure à l'aide d'un clavier (7).

**6)** Dispositif selon la revendication 5, caractérisé en ce que le dispositif électronique est agencé pour réaliser une quatrième séquence de calcul pour produire un résultat de calcul à partir au moins de la valeur de dimension mesurée et d'une dite information.

**7)** Dispositif selon une des revendications précédentes, caractérisé en ce que lesdits aimants (11) de l'élément gradué (2) ont une taille et un écartement agencés pour produire plusieurs classes de mesure dans autant de zones de l'élément gradué (2).

**8)** Dispositif selon une des revendications précédentes, caractérisé en ce que ledit élément déplaçable comporte des capteurs (A, B, 15, 16, 17, 18) décalés de manière à permettre une identification du sens du déplacement.

**9)** Dispositif selon la revendication 8 caractérisé en ce qu'il comporte deux capteurs (A, B, 15, 16, 17, 18) dont l'espacement est sensiblement égal à une demi-largeur d'aimant (modulo le pas des aimants) et en ce qu'il comporte un circuit logique incrémentant ou décrémentant un compteur suivant l'ordre d'attaque des capteurs (A, B, 15, 15, 17, 18) lorsque ceux-ci changent l'un et l'autre d'état logique.

**10)** Dispositif selon une des revendications précédentes, caractérisé en ce qu'il comporte au moins un élément de commande manuel pour dérouler une pluralité de séquences de validation correspondant à une opération de mesure.
